# EUROPÄISCHE PATENTSCHRIFT

(11) **EP 2 867 530 B1**
(45) Veröffentlichungstag und Bekanntmachung des Hinweises auf die Patenterteilung: **22.05.2019**
(21) Anmeldenummer: 13725342.3
(22) Anmeldetag: 23.05.2013
(51) Int. Cl.: F04B 1/04, F02M 59/10

(54) **STÖßEL**
TAPPET
PISTON PLONGEUR

(30) Priorität: 28.06.2012 DE 102012211113
(43) Veröffentlichungstag der Anmeldung: 06.05.2015
(73) Patentinhaber: Schaeffler Technologies AG & Co. KG, 91074 Herzogenaurach (DE)
(72) Erfinder: DORN, Stefan, 96142 Hollfeld (DE); GEYER, Norbert, 91315 Höchstadt (DE)
(86) Internationale Anmeldenummer: PCT/EP2013/060603
(87) Internationale Veröffentlichungsnummer: WO 2014/000993

(56) Entgegenhaltungen:
- DE-A1-102006 057 246
- DE-A1-102010 022 319
- US-A1- 2011 220 070

## Beschreibung

Die Erfindung betrifft einen Stößel, insbesondere für eine Pumpe oder einen Verdichter, mit einem rohrähnlichen Gehäuse, bei dessen antriebsseitiger Ringstirn zwei von einem Außenmantel des Gehäuses eingerückte Flachs sich diametral gegenüber liegen, in denen ein eine Rolle tragender Bolzen gelagert ist, wobei ein Innenmantel des Gehäuses, axial unterhalb der Rolle, von einem separaten Brückenstück durchragt ist, dessen abtriebsseitige Stirn als Anlage für ein Stößelfolgeteil fungiert und das axial einerseits in Richtung zur antriebsseitigen Ringstirn an Unterseiten der Flachs sowie andererseits in Richtung zu einer abtriebsseitigen Ringstirn des Gehäuses durch einen am Innenmantel fixierten Sicherungsring anliegt.

Ein derartiger Stößel, hier zur Beaufschlagung eines Pumpenkolbens einer Kraftstoffhochdruckpumpe einer Brennkraftmaschine, geht aus der DE 10 2006 057 246 A1, Fig. 1A - 1C hervor. Dessen Brückenstück kann sich axial und radial geringfügig bewegen, was zu einer unerwünschten Geräuschemission, einfach gesagt zum Klappern führen kann. Zudem wird festgestellt, dass das scheibenartige Brückenstück vergleichsweise dünn ist und somit den hohen Belastungen heutiger Kraftstoffhochdruckpumpen ggf. nicht mehr gewachsen ist. Ein deutlich dicker gestaltetes Brückenstück lässt sich jedoch nicht montieren. Außerdem gestattet das den Stößel radial nahezu ausfüllende Brückenstück nur einen vergleichsweise schlechten Mediendurchtritt, so bspw. von Dieselöl bei Einsatz des Stößels in einer Kraftstoffhochdruckpumpe einer qualitätsgesteuerten Brennkraftmaschine.

Aufgabe der Erfindung ist es daher, einen Stößel wie eingangs genannt zu schaffen, der geräuscharm arbeitet und hohen Belastungen gewachsen ist.

Erfindungsgemäß wird diese Aufgabe gemäß Anspruch 1 dadurch gelöst, dass das Brückenstück durch den Sicherungsring axial und radial spielfrei verspannt im Gehäuse gehalten ist.

Somit liegt ein Stößel ohne die vorgenannten Nachteile vor. Das Brückenstück ist über den Sprengring vergleichsweise simpel radial und axial verspannt. Besonders bevorzugt ist es hierbei, wenn, so wie vorgeschlagen, zur Darstellung der radialen Verspannung zwischen dem Brückenstück und dem Innenmantel des Gehäuses hakenartig in Axialrichtung des Stößels abgebogene Sprengenden des Sicherungsrings, sich voneinander weg aufspreizend, verlaufen. Denkbar sind an dieser Stelle jedoch auch separate Keile oder dergleichen.

Insbesondere dann, wenn das Brückenstück wie in Fortbildung der Erfindung vorgesehen als Balken vorliegt, agieren die Sprengenden letztlich in einem linsen- oder kreisabschnittsförmigen Spalt und verspannen das System Brückenstück-Gehäuse radial hervorragend miteinander. Vorhandene Spiele werden einfach ausgeglichen.

Bei einer balkenförmigen Gestaltung des bspw. gestanzten Brückenstücks lässt sich dieses vergleichsweise einfach durch schräges Ansetzen und Einschieben montieren und mit einer vergrößerten Höhe versehen. Ein vergleichsweise großer Volumenstrom an bspw. Dieselkraftstoff / Schmiermittel ist seitlich am Brückenstück entlang ermöglicht.

Einfache Maßnahmen einer axialen Halterung des Sicherungsrings sind Gegenstand eines weiteren Unteranspruchs. Demnach kann der Sicherungsring entweder auf vom Innenmantel des Gehäuses einragenden Haltevorsprüngen oder in einer Ringnut im Innenmantel des Gehäuses sitzen. Im Fall der Haltevorsprünge ist es zweckmäßig, diese bspw. a) als vom Außenmantel des Gehäuses ausgehende Anprägungen / Materialdurchstellungen, b) als Anstemmungen am Innenmantel des Gehäuses oder c) als Schweiß- o. Lötpunkte am Innenmantel des Gehäuses oder dergleichen auszubilden.

In weiterer Konkretisierung der Erfindung können die Haltevorsprünge als Schnappnasen oder schnappnasenähnlich ausgebildet sein, auf deren dachähnlichen Oberseiten der Sprengring aufliegt.

Als Sprengring ist bspw. an ein genormtes Axialsicherungselement wie an einen Runddraht-Sprengring gedacht, dessen Sprengenden nachträglich lediglich noch abgewinkelt sind. Es kommen jedoch eine Vielzahl von anderen offenen Ringformen, auch nicht genormte Ringe, infrage.

Der vorschlagsgemäße Stößel soll zur wenigstens mittelbaren Beaufschlagung eines Pumpenkolbens einer Kraftstoffeinspritzpumpe einer qualitäts- oder quantitätsgesteuerten Brennkraftmaschine Verwendung finden. Gleichermaßen kommt ein Einsatz in einem Ventiltrieb einer Brennkraftmaschine oder in einem Axial- oder Radialkolbenverdichter oder einer respektiven -pumpe infrage.

Die Erfindung wird anhand der Zeichnung erläutert.
- Figur 1 zeigt eine räumliche Ansicht des Stößels;
- Figur 2 zeigt den Sprengring als Einzelheit;
- Figur 3 zeigt den Stößel im Längsschnitt entlang dem balkenförmigen Brückenstück;
- Figur 4 zeigt einen um 90° gegenüber Figur 3 gedrehten Längsschnitt und
- Figur 5 zeigt eine Unteransicht des Stößels nach Figur 4.

Dargestellt ist ein Stößel 1 für eine Kraftstoffhochdruckpumpe einer Brennkraftmaschine. Der Stößel 1 hat ein rohr- bzw. ringähnliches Gehäuse 2, bei dessen antriebsseitiger Ringstirn 3 sich zwei von einem Außenmantel 4 des Gehäuses 2 eingerückte Flachs 5 diametral gegenüber liegen. In jedem Flach 5 ist ein Ende eines eine wälzgelagerte Rolle 6 tragenden Bolzens 7 aufgenommen. Die Rolle 6 dient einem Anlauf eines Nockens oder Exzenters oder einer Gruppe eines hiervon.

Ein Innenmantel 8 des Gehäuses 2 ist axial unterhalb der Rolle 6 von einem balkenartigen und vergleichsweise dickwandigen Brückenstück 9 durchragt, dessen abtriebsseitige Stirn 10 als Anlage für einen Pumpenkolben als Stößelfolgeteil dient.

Das balkenartige Brückenstück 9 ist axial in Richtung zur antriebsseitigen Ringstirn 3 an bogensehnenartigen Unterseiten 13 der Flachs 5 gehalten. In Richtung zur gegenüberliegenden abtriebsseitigen Ringstirn 11 des Gehäuses 2 ist ein am Innenmantel 8 fixierter Sicherungsring 12 vorgesehen, wobei das Brückenstück 9 zwischen Letztgenanntem und den Unterseiten 13 der Flachs 5 spielfrei axial verspannt ist. Zur Fixierung des Sicherungsrings 12 dienen umfangsverteilte Haltevorsprünge 15, die vom Außenmantel 4 des Gehäuses 2 eingerückte Schnappnasen sind.

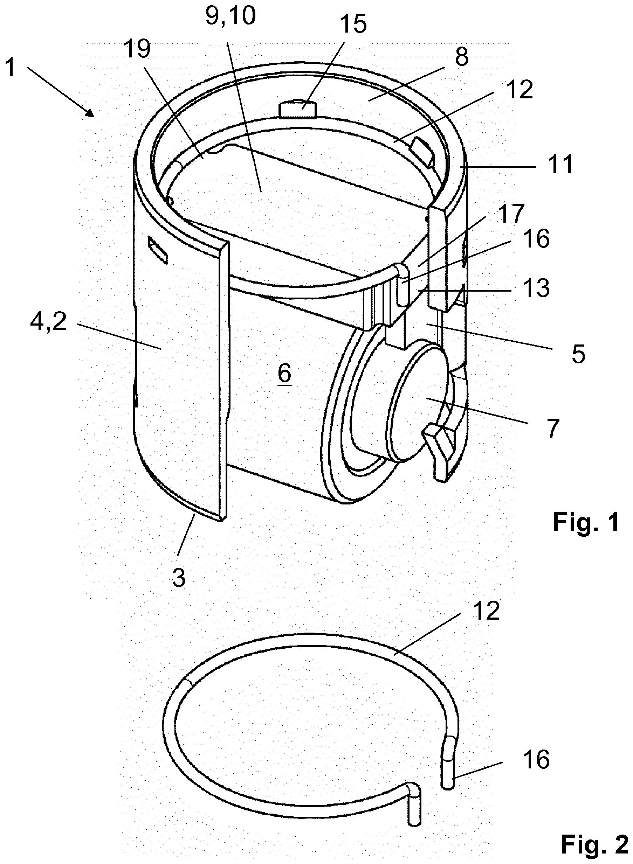

Wie aus Figur 2 zu erkennen ist, sind Sprengenden 16 des Sicherungsrings 12 hakenartig in Axialrichtung abgebogen. Sie sitzen in einem kreisabschnittsähnlichen Spalt 18 zwischen dem Innenmantel 8 des Gehäuses 2 und einer Abflachung 17 an einer Endstirn 20 des Brückenstücks 9. Aufgrund der radial nach außen wirkenden Vorspannung des Sprengrings 12 und letztlich dessen Sprengenden 16 erfolgt somit eine simple radiale Verspannung des Brückenstücks 9.

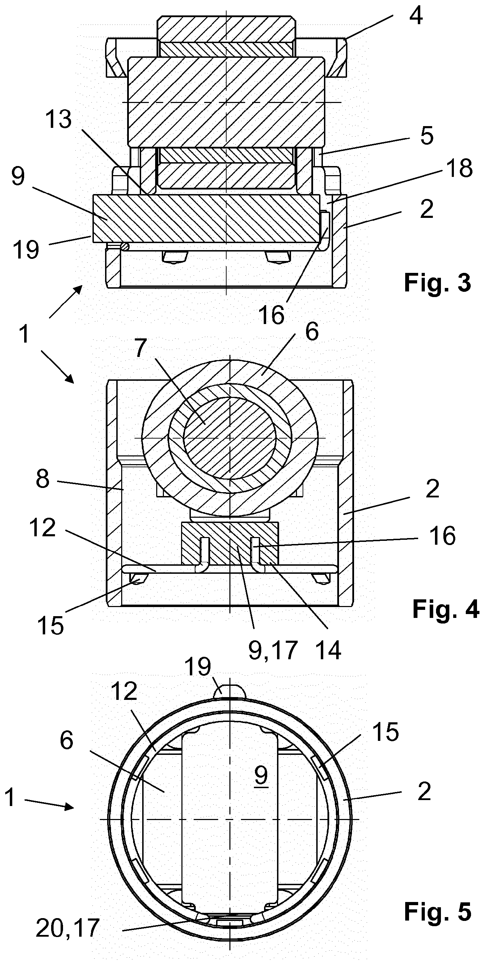

Wie am besten aus den Figuren 3 und 5 hervorgeht, durchragt das Brückenstück 9 auf der Seite seiner weiteren Endstirn 19 nasenartig das Gehäuse 2, so dass gleichzeitig eine einfache Verdrehsicherung für den Stößel 1 gegenüber dessen Führung gegeben ist. Auf separate Verdrehsicherungskörper kann somit verzichtet werden.

Summa summarum ist das Brückenstück 9 axial und radial verspannt im Gehäuse 2 gehalten. Klappergeräusche durch eine axiale Beweglichkeit des Brückenstücks 9 treten nicht mehr auf.

### Liste der Bezugszahlen

1) Stößel
2) Gehäuse
3) antriebsseitige Ringstirn
4) Außenmantel
5) Flach
6) Rolle
7) Bolzen
8) Innenmantel
9) Brückenstück
10)Stirn
11)abtriebsseitige Ringstirn
12)Sicherungsring
13)Unterseite
14)Oberseite
15)Haltevorsprung
16)Sprengende
17)Abflachung
18)Linsenspalt
19)eine Endstirn
20)weitere Endstirn

## Patentansprüche

1. Stößel (1), insbesondere für eine Pumpe oder einen Verdichter, mit einem rohrähnlichen Gehäuse (2), bei dessen antriebsseitiger Ringstirn (3) sich zwei von einem Außenmantel (4) des Gehäuses (2) eingerückte Flachs (5) diametral gegenüber liegen, in denen ein eine Rolle (6) tragender Bolzen (7) gelagert ist, wobei ein Innenmantel (8) des Gehäuses (2), axial von der antriebsseitigen zu einer abtriebsseitigen Ringstirn (3, 11) des Gehäuses (2) gesehen, nach der Rolle (6) von einem separaten Brückenstück (9) durchragt ist, dessen abtriebsseitige Stirn (10) als Anlage für ein Stößelfolgeteil fungiert, welches Brückenstück (9) axial einerseits in Richtung zur antriebsseitigen Ringstirn (3) an Unterseiten (13) der Flachs (5) sowie andererseits in Richtung zu der abtriebsseitigen Ringstirn (11) des Gehäuses (2) durch einen am Innenmantel (8) fixierten Sicherungsring (12) gehalten ist, welcher Sicherungsring (12) entweder auf vom Innenmantel (8) des Gehäuses (2) einragenden Haltevorsprüngen (15) oder in einer Ringnut im Innenmantel (8) des Gehäuses (2) sitzt, **dadurch gekennzeichnet, dass** das Brückenstück (9) einerseits eine axial verspannte Halterung im Gehäuse (2) durch Einklemmen zwischen einer Oberseite (14) des Sicherungsrings (12) und den Unterseiten (13) der Flachs (5) und andererseits eine radial verspannte Halterung im Gehäuse (2) durch hakenartig in Axialrichtung des Stößels (1) abgebogene und sich voneinander weg aufspreizende Sprengenden (16) des Sicherungsrings (12) erfährt, welche Sprengenden (16) zwischen dem Innenmantel (8) des Gehäuses (2) und dem Brückenstück (9) verlaufen.

2. Stößel nach Anspruch 1, **dadurch gekennzeichnet, dass** das Brückenstück (9) mit einer bogensehnenartigen Abflachung (17) versehen ist, wobei in den zwischen dieser und dem Innenmantel (8) des Gehäuses (2) gebildeten Linsenspalt (18) die Sprengenden (16) des Sicherungsrings (12) greifen.

3. Stößel nach Anspruch 1 oder 2, **dadurch gekennzeichnet, dass** das Brückenstück (9) als Balken vorliegt, dessen eine Endstirn (19) nasenartig das Gehäuse (2) zur Darstellung einer Stößelverdrehsicherung durchragt, wobei, im Fall des Rückbezugs nach Anspruch 2, dessen weitere Endstirn (20) als die Abflachung (17) vorliegt.

4. Stößel nach Anspruch 1, **dadurch gekennzeichnet, dass**, im Fall der Haltevorsprünge (15) als Sitz für den Sicherungsring (12), die Haltevorsprünge (15) entweder a) als vom Außenmantel (4) des Gehäuses (2) ausgehende Anprägungen / Materialdurchstellungen, b) als Anstemmungen am Innenmantel (8) des Gehäuses (2) oder c) als Schweiß- o. Lötpunkte am Innenmantel (8) des Gehäuses (2) vorliegen.

5. Stößel nach Anspruch 1, **dadurch gekennzeichnet, dass**, im Falle der Haltevorsprünge (15) als Sitz für den Sicherungsring (12), die Haltevorsprünge (15) als Schnappnasen ausgebildet sind.

## Claims

1. Tappet (1), in particular for a pump or a compressor, having a tube-like housing (2), at the drive-side annular end (3) of which two flats (5) which are indented from an outer shell (4) of the housing (2) lie diametrically opposite one another, in which flats (5) a pin (7) which carries a roller (6) is mounted, an inner shell (8) of the housing (2) being penetrated by a separate bridge piece (9) behind the roller (6), as viewed axially from the drive-side annular end to an output-side annular end (3, 11) of the housing (2), the output-side end (10) of which bridge piece (9) acts as a rest for a tappet following part, which bridge piece (9) is held axially on one side in the direction of the drive-side annular end (3) on bottom sides (13) of the flats (5) and on the other side in the direction of the output-side annular end (11) of the housing (2) by way of a securing ring (12) which is fixed on the inner shell (8), which securing ring (12) is seated either on holding projections (15) which protrude from the inner shell (8) of the housing (2) or in an annular groove in the inner shell (8) of the housing (2), **characterized in that** the bridge piece (9) experiences firstly axially braced holding in the housing (2) by way of being clamped in between a top side (14) of the securing ring (12) and the bottom sides (13) of the flats (5) and secondly radially braced holding in the housing (2) by way of circlip ends (16) of the securing ring (12) which are bent away in a hook-like manner in the axial direction of the tappet (1) and spread open away from one another, which circlip ends (16) run between the inner shell (8) of the housing (2) and the bridge piece (9).

2. Tappet according to Claim 1, **characterized in that** the bridge piece (9) is provided with a bowstring-like flattened portion (17), the circlip ends (16) of the securing ring (12) engaging into the lenticular gap (18) which is formed between the said bowstring-like flattened portion (17) and the inner shell (8) of the housing (2).

3. Tappet according to Claim 1 or 2, **characterized in that** the bridge piece (9) is present as a beam, the one end (19) of which penetrates the housing (2) in a lug-like manner in order to produce a tappet anti-rotation safeguard, the further end (20) of which, in the case of the back-reference to Claim 2, is present as the flattened portion (17).

4. Tappet according to Claim 1, **characterized in that**, in the case of the holding projections (15) as a seat for the securing ring (12), the holding projections (15) are present either a) as indentations/material bumps which emanate from the outer shell (4) of the housing (2), b) as caulked portions on the inner shell (8) of the housing (2), or c) as welded or soldered points on the inner shell (8) of the housing (2).

5. Tappet according to Claim 1, **characterized in that**, in the case of the holding projections (15) as a seat for the securing ring (12), the holding projections (15) are configured as snap-in lugs.

## Revendications

1. Piston (1) destiné notamment à une pompe ou un compresseur et comprenant un boîtier (2) sensiblement tubulaire dont l'extrémité annulaire côté entraînement (3) comprend deux plats (5) saillant vers l'intérieur depuis une enveloppe extérieure (4) du boîtier (2) et placés diamétralement à l'opposé l'un de l'autre, plats dans lesquels est logé un boulon (7) portant un galet (6), une enveloppe intérieure (8) du boîtier (2), vue axialement de l'extrémité annulaire côté entraînement vers une extrémité annulaire côté sortie (3, 11) du boîtier (2), fait saillie vers le galet (6) depuis une pièce de pontage séparée (9) dont l'extrémité côté sortie (10) sert d'appui à une pièce suiveuse de piston, laquelle pièce suiveuse de piston (9) est maintenue par une bague de fixation (12) fixée à l'enveloppe intérieure (8) axialement d'une part en direction de l'extrémité annulaire côté entraînement (3) sur des côtés inférieurs (13) des plats (5) et d'autre part en direction de l'extrémité annulaire côté sortie (11) du boîtier (2), laquelle bague de fixation (12) siège soit sur des saillies de retenue (15) saillant vers l'intérieur depuis l'enveloppe intérieure (8) du boîtier (2) soit dans une gorge annulaire de l'enveloppe intérieure (8) du boîtier (2),
**caractérisé en ce que** la pièce de pontage (9) d'une part une fixation à déformation axiale dans le boîtier (2) par serrage entre un côté supérieur (14) de la bague de fixation (12) et les côtés inférieurs (13) des plats (5) et d'autre part une fixation à déformation radiale dans le boîtier (2) par des extrémités à éclatement (16) de la bague de fixation (12) qui sont pliées en forme de crochet dans la direction axiale du piston (1) et qui sont écartées l'une de l'autre, lesquelles extrémités à éclatement (16) s'étendent entre l'enveloppe intérieure (8) du boîtier (2) et la pièce de pontage (9).

2. Piston selon la revendication 1, **caractérisé en ce que** la pièce de pontage (9) est munie d'un aplatissement (17) en forme de corde d'arc, les extrémités à éclatement (16) de la bague de fixation (12) s'engageant dans la fente pour lentille (18) formée entre ledit aplatissement et l'enveloppe intérieure (8) du boîtier (2).

3. Piston selon la revendication 1 ou 2, **caractérisé en ce que** la pièce de pontage (9) se présente sous la forme d'une barre dont une extrémité (19) fait saillie à la manière d'un bec à travers le boîtier (2) pour représenter une sécurité anti-rotation du piston ; en cas de référence à la revendication 2, l'autre extrémité (20) se présente sous la forme d'un aplatissement (17).

4. Piston selon la revendication 1, **caractérisé en ce que**, dans le cas des saillies de retenue (15) servant de siège à la bague de fixation (12), les saillies de retenue (15) se présentent soit a) comme des gravures/des traversées de matière depuis l'enveloppe extérieure (4) du boîtier (2), b) comme des entailles au niveau de l'enveloppe intérieure (8) du boîtier (2) ou c) comme des points de soudure ou brasure au niveau de l'enveloppe intérieure (8) du boîtier (2).

5. Piston selon la revendication 1, **caractérisé en ce que**, dans le cas de saillies de retenue (15) servant de siège à la bague de fixation (12), les saillies de retenue (15) sont conçues sous la forme de becs d'encliquetage.
